# EUROPEAN PATENT SPECIFICATION

(11) **EP 3 187 925 B1**
(45) Date of publication and mention of the grant of the patent: **18.12.2019**
(21) Application number: 16802368.7
(22) Date of filing: 24.03.2016
(51) Int. Cl.: G02F 1/1333, G02F 1/1335, H04M 1/02

(54) **COVER PANEL FOR A DISPLAY AND MOBILE TERMINAL HAVING THE SAME**
ABDECKTAFEL FÜR EINE ANZEIGE UND MOBILTERMINAL DAMIT
PANNEAU DE PROTECTION POUR ECRAN ET TERMINAL MOBILE LE COMPRENANT

(30) Priority: 29.05.2015 CN 201510290198
(43) Date of publication of application: 05.07.2017
(73) Proprietor: GUANGDONG OPPO MOBILE TELECOMMUNICATIONS CORP., LTD., Wusha, Chang'an Dongguan, Guangdong 523860 (CN)
(72) Inventor: LI, Yong, Guangdong (CN); CHENG, Jiao, Dongguan Guangdong 523860 (CN); LIN, Yugui, Dongguan Guangdong 523860 (CN)
(74) Representative: Mewburn Ellis LLP
(86) International application number: PCT/CN2016/077204
(87) International publication number: WO 2016/192445

(56) References cited:
- WO-A1-2014/065064
- WO-A2-2010/071350
- CN-A- 103 971 602
- CN-U- 202 363 051
- CN-U- 204 758 969
- KR-A- 20140 121 722
- US-A1- 2014 104 712
- US-A1- 2015 138 484

## Description

### TECHNICAL FIELD

The present disclosure relates to a panel for a display screen and a mobile terminal having the panel.

### BACKGROUND

With continuous development of technology of manufacturing LCD (Liquid Crystal Display) devices, in order to improve user experience, the borders of the LCD devices are becoming smaller and smaller. In most of mobile terminals available in the market, LCD screens are adopted. In order to increase a size of a display screen of a mobile terminal and improve aesthetic appearance thereof, the border of the display screen of the mobile terminal should be rendered small while the size of the mobile terminal is restricted, and in addition, the edge of the glass panel of the mobile terminal are designed to be arc-shaped to improve the visual effect. However, the arc-shaped surfaces of the edge of the glass panel may cause convex lens effect, such that light and images in the display region at the edge portion of the display screen under the glass may be enlarged and exploded, and a rainbow-colored belt may appear at the edge of the glass panel, resulting in display deformation at the edge of the display region and impacting the overall display effect of the display region.

US 2015/0138484A1 relates to a display device which includes a display panel, a light-transmitting cover arranged closer to a viewer than the display panel so as to cover the display panel and including a lens portion at a position corresponding to an end portion of the display panel, and a bezel including a side frame portion which covers the side surface of the display panel at least US2014/0104712 A1 also discloses a cover for a display device, the cover comprising an arc-shaped portion at its periphery.

### SUMMARY

The purpose of the present disclosure is to propose a panel for a display screen which can prevent the impact on the display effect of the display screen due to the display deformation at the edge of the display region of the panel.

According to the invention, there is provided a cover panel as set out in claim 1 and a mobile terminal having the cover panel as set out in claim 8.

The present disclosure provides a panel for a display screen comprising a transparent region and a border region surrounding the transparent region; the border region comprises an inner surface and an outer surface disposed oppositely to the inner surface; the outer surface is an arc-shaped surface extending away from the transparent region and bending; a light scattering layer is provided on the inner surface, and an orthographic projection of the light scattering layer is on the arc-shaped surface.

Furthermore, the light scattering layer is a frosted layer formed on the inner surface by means of etching.

Furthermore, the light scattering layer is a transparent frosted film attached to the inner surface, or a semi-transparent ink layer formed by means of screen printing.

Furthermore, the transparent region comprises a back surface and a protection surface disposed oppositely to the back surface, and the back surface and the inner surface are interconnected and are together located within a same plane.

Furthermore, the panel is a transparent glass plate.

The present disclosure provides a mobile terminal comprising a backlight module, a display module mounted on the backlight module and a panel mounted on the display module; the display module comprises a display region and a non-display region disposed surrounding the display region; the panel comprises a transparent region and a border region surrounding the transparent region; the border region comprises an inner surface and an outer surface; the outer surface is an arc-shaped surface extending away from the transparent region and bending; a light scattering layer is provided on the inner surface, and an orthographic projection of the light scattering layer is on the arc-shaped surface; the panel covers the display module, with the transparent region covering the display region, the border region covering the non-display region.

Furthermore, the light scattering layer is a frosted layer formed on the inner surface by means of etching.

Furthermore, the light scattering layer is a transparent frosted film attached to the inner surface, or a semi-transparent ink layer formed by means of screen printing.

Furthermore, the transparent region comprises a back surface and a protection surface disposed oppositely to the back surface, and the back surface and the inner surface are interconnected and are together located within a same plane.

Furthermore, the panel is a transparent glass plate.

The light scattering layer is disposed in the border region of the panel of the present disclosure, such that the light incident into the border region is scattered when passing through the light scattering layer, and exits from the arc-shaped outer surface, thereby visually generating atomization effect and preventing the displayed content from being displayed in a deformed manner due to the existence of the arc-shaped outer surface. The user will not see the deformed displayed content and the display effect is ensured.

### BRIEF DESCRIPTION OF DRAWINGS

In order to more clearly describe technical solutions according to embodiments of the present disclosure, the accompanying drawings used for describing the embodiments will be briefly introduced hereinafter. Apparently, the accompanying drawings described hereinafter merely show some embodiments of the present disclosure, and persons skilled in the art may also derive other drawings from these accompanying drawings without creative efforts.
FIG. 1 is a schematic cross-sectional view of a panel for a display screen according to an embodiment of the present disclosure.
FIG. 2 is a schematic view of a mobile terminal with the panel as illustrated in FIG. 1, wherein a visible surface is a transparent light scattering layer of the panel.

### DETAILED DESCRIPTION

In conjunction with the drawings in the embodiments of the present disclosure, a clear, complete description for the technical solutions in the embodiments of the present disclosure is provided below. Apparently, the described embodiments are a part rather than all of the embodiments of the present disclosure. All other embodiments obtained by persons skilled in the art according to the embodiments of the present disclosure without creative efforts should fall within the scope of the present disclosure.

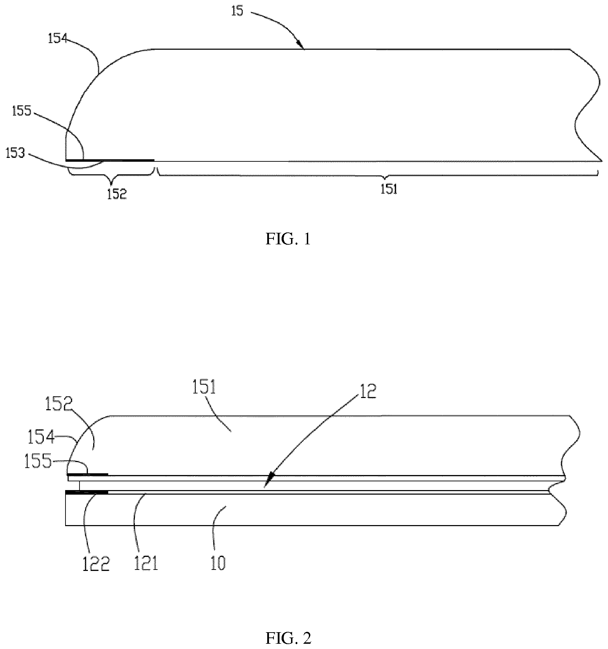

Referring to FIG. 1, a panel for a display screen and a mobile terminal is provided in an embodiment of the present disclosure. The mobile terminal includes a backlight module 10, a display module 12 mounted on the backlight module 10 and a panel 15 mounted on the display module 12. The display module 12 includes a display region 121 and a non-display region 122 disposed surrounding the display region. The panel 15 includes a transparent region 151 and a border region 152 surrounding the transparent region 151. The border region 152 includes an inner surface 153 and an outer surface 154 disposed oppositely to the inner surface 153. The outer surface 154 is an arc-shaped surface extending away from the transparent region 151 and bending. A light scattering layer 155 is provided on the inner surface 153. An orthographic projection of the light scattering layer 155 is on the arc-shaped surface. The panel 15 covers the display module 12, with the transparent region 151 covering the display region 121, the border region 152 covering the non-display region 122. In the embodiment, the panel 15 covers the display module 12 of the mobile terminal, protects the display module 12, and operations on the interface of the display module 12 can be performed by touching the panel 15.

In the embodiment, the arc-shaped outer surface 154 is configured for, when the light emitted from the display region is refracted to the outside of the panel 15, causing the light exiting from the arc-shaped surface to exit subsequently to the outside of the panel after the light is refracted due to the arc-shaped surface as viewed from the angle of view of the user, thereby rendering the light emitting region of the panel larger than the display region 121 of the display module 12, and accordingly visually reducing the width of the non-display region.

In this embodiment, the panel 15 is a transparent glass plate. The border region 152 and the transparent region 151 integrally form a flat plate. In other embodiments, the border region 152 and the transparent region 151 are disposed to form a certain angle, and constitute a panel with an outer peripheral side surface. The transparent region 151 includes a back surface and a protection surface disposed oppositely to the back surface. The back surface and the inner surface 153 are interconnected and are together located within a same plane. The outer surface 154 of the border region 152 is a region surrounding the protection surface, that is to say, the outer surface 154 is the outer peripheral region of the panel 15 which may be a chamfered location or may be the outer peripheral side surface of the panel 15. The backlight module 10, the display module 12 and the panel 15 constitute the display screen of the mobile terminal. The transparent region 151 is opposite to the display region 121 of the display device 12. The back surface faces the display module 12, and the protection surface is the outer surface of the display screen of the mobile terminal.

In a first embodiment of the present disclosure, the light scattering layer 155 is a frosted layer formed on the inner surface 153 by means of etching. That is to say, a uniformly rough frosted layer with particles is formed on the inner surface by etching the whole inner surface 153. The frosted layer is semi-transparent and allows light to pass therethrough. In other embodiments, the light scattering layer may also be a uniformly rough surface formed by mechanically or manually grinding the inner surface with abrasive materials such as emery, silica sand, garnet powder and so on.

The existence of the arc-shaped surface in the border region of the panel 15 is such that when images (pictures or characters) are displayed in the display region of the panel 12, the displayed content adjacent to the non-display region is deformed due to expansion of range of the light from the arc-shaped surface, thereby impacting the display effect. However, the light scattering layer 155 is disposed in the border region 152, such that the light incident into the border region is scattered when passing through the light scattering layer, and the scattered light exits from the arc-shaped outer surface 151, thereby visually generating atomization effect and preventing the displayed content from being displayed in a deformed manner. The user will not see the deformed displayed content and the display effect is ensured.

In another embodiment of the present disclosure, the light scattering layer 155 is a transparent frosted film attached to the inner surface 152. The frosted film is a semi-transparent film, one surface being a rough surface, the other surface being provided with adhesive used for attaching the light scattering layer onto the inner surface 152. When passing through the light scattering layer in the form of the frosted film, the light incident into the border region is scattered due to the frosted film, and the scattered light exits from the arc-shaped outer surface 151, thereby preventing the displayed content from being displayed in a deformed manner.

In the third embodiment of the present disclosure, the light scattering layer 155 is a semi-transparent ink layer formed by means of screen printing. In the embodiment, after the panel 15 is formed, the light scattering layer 155 is formed from semi-transparent ink on the inner surface 152 by means of screen printing.

The foregoing is merely embodiments of the present disclosure. Persons skilled in the art may understand and realize all or a part of processes of the above-mentioned embodiments, and any equivalent variances.

## Claims

1. A cover panel (15) for covering a display module,
wherein the cover panel (15) comprises a transparent region (151) and a border region (152) surrounding the transparent region (151), wherein the transparent region (151) has a protection surface and a back surface opposite the protection surface, wherein the back surface is intended to face a display region (121) of the display module;
wherein the border region (152) has an outer surface (154) and an inner surface (153), wherein the inner surface (153) has a first end connecting to the outer surface (154) and a second end opposite the first end, wherein the outer surface (154) is disposed oppositely to the inner surface (153), and wherein the outer surface (154) is an arc-shaped surface extending away from the transparent region (151) and bending; and
**characterized in that**:
the second end of the inner surface (153) connects to the back surface of the transparent region (151);
the inner surface (153) and the back surface of the transparent region (151) lie in the same plane;
a light scattering layer (155) is disposed on the inner surface (153) in the border region (152), whereby the light scattering layer (155) scatters light incident into the border region (152) that passes through the light scattering layer (155), and the scattered light exits from the outer surface (151), wherein the light scattering layer (155) has an orthographic projection on the outer surface (154), and the orthographic projection coincides with the outer surface (154).

2. The cover panel according to claim 1, wherein the border region (152) and the transparent region (151) integrally form a flat plate.

3. The cover panel according to claim 1 or 2, wherein the light scattering layer (155) is a frosted layer formed on the inner surface (153).

4. The cover panel according to claim 1 or 2, wherein the light scattering layer (155) is a transparent frosted film attached to the inner surface (153).

5. The cover panel according to claim 1 or 2, wherein the light scattering layer (155) is a semi-transparent ink layer.

6. The cover panel according to claim 4, wherein one surface of the frosted film is a rough surface, the other surface of the frosted film is provided with adhesive.

7. The panel according to any one of claims 1 to 6, wherein the panel (15) is a transparent glass plate.

8. A mobile terminal, comprising a backlight module (10), a display module (12) mounted on the backlight module (10)and the cover panel (15) of claim 1, wherein the display module (12)comprises the display region (121) and a non-display region (122)disposed surrounding the display region (121); the cover panel(15) covers the display module (12), with the transparent region (151) covering the display region (121), the border region (152) covering the non-display region (122).

9. The mobile terminal according to claim 8, wherein the border region (152) and the transparent region (151) integrally form a flat plate.

10. The mobile terminal according to claim 8 or 9, wherein the light scattering layer (155) is a frosted layer formed on the inner surface (153).

11. The mobile terminal according to claim 8 or 9, wherein the light scattering layer (155) is a transparent frosted film attached to the inner surface (153).

12. The mobile terminal according to claim 8 or 9, wherein the light scattering layer (155) is a semi-transparent ink layer.

13. The mobile terminal according to any one of claims 8 to 12, wherein the cover panel (15) is a transparent glass plate.

## Patentansprüche

1. Abdeckelement (15) zum Abdecken eines Anzeigemoduls,
wobei das Abdeckelement (15) einen transparenten Bereich (151) und einen den transparenten Bereich (151) umgebenden Randbereich (152) umfasst, wobei der transparente Bereich (151) eine Schutzfläche und eine der Schutzfläche entgegengesetzte Rückfläche aufweist, wobei die Rückfläche ausgelegt ist, einem Anzeigebereich (121) des Anzeigemoduls zugewandt zu sein;
wobei der Randbereich (152) eine Außenfläche (154) und eine Innenfläche (153) aufweist, wobei die Innenfläche (153) ein mit der Außenfläche (154) verbundenes, erstes Ende und ein dem ersten Ende entgegengesetztes, zweites Ende aufweist, wobei die Außenfläche (154) zur Innenfläche (153) entgegengesetzt angeordnet ist, und wobei die Außenfläche (154) eine bogenförmige Oberfläche ist, die sich von dem transparenten Bereich (151) weg erstreckt und gebogen ist; und
**dadurch gekennzeichnet,**
**dass** das zweite Ende der Innenfläche (153) mit der Rückfläche des transparenten Bereichs (151) verbunden ist;
**dass** die Innenfläche (153) und die Rückfläche des transparenten Bereichs (151) in derselben Ebene liegen;
**dass** eine Lichtstreuschicht (155) auf der Innenfläche (153) im Randbereich (152) angeordnet ist, wodurch die Lichtstreuschicht (155) in den Randbereich (152) einfallendes Licht, das durch die Lichtstreuschicht (155) hindurchtritt, streut, und das gestreute Licht aus der Außenfläche (151) austritt, wobei die Lichtstreuschicht (155) eine Orthogonalprojektion auf die Außenfläche (154) aufweist, und die Orthogonalprojektion mit der Außenfläche (154) deckungsgleich ist.

2. Abdeckelement nach Anspruch 1, wobei der Randbereich (152) und der transparente Bereich (151) einstückig eine flache Platte bilden.

3. Abdeckelement nach Anspruch 1 oder 2, wobei die Lichtstreuschicht (155) eine auf der Innenfläche (153) ausgebildete, mattierte Schicht ist.

4. Abdeckelement nach Anspruch 1 oder 2, wobei die Lichtstreuschicht (155) eine transparente mattierte Folie ist, die an der Innenfläche (153) angebracht ist.

5. Abdeckelement nach Anspruch 1 oder 2, wobei die Lichtstreuschicht (155) eine halbtransparente Druckfarbschicht ist.

6. Abdeckelement nach Anspruch 4, wobei eine Oberfläche der mattierten Folie eine raue Oberfläche ist, die andere Oberfläche der mattierten Folie mit Haftmittel bereitgestellt ist.

7. Element nach einem der Ansprüche 1 bis 6, wobei das Element (15) eine transparente Glasplatte ist.

8. Mobiles Endgerät, umfassend ein Hintergrundbeleuchtungsmodul (10), ein auf dem Hintergrundbeleuchtungsmodul (10) angebrachtes Anzeigemodul (12) und das Abdeckelement (15) nach Anspruch 1, wobei das Anzeigemodul (12) den Anzeigebereich (121) und einen Nicht-Anzeigebereich (122), der den Anzeigebereich (121) umgebend angeordnet ist, umfasst; wobei das Abdeckelement (15) das Anzeigemodul (12) abdeckt, wobei der transparente Bereich (151) den Anzeigebereich (121) abdeckt, wobei der Randbereich (152) den Nicht-Anzeigebereich (122) abdeckt.

9. Mobiles Endgerät nach Anspruch 8, wobei der Randbereich (152) und der transparente Bereich (151) einstückig eine flache Platte bilden.

10. Mobiles Endgerät nach Anspruch 8 oder 9, wobei die Lichtstreuschicht (155) eine auf der Innenfläche (153) ausgebildete, mattierte Schicht ist.

11. Mobiles Endgerät nach Anspruch 8 oder 9, wobei die Lichtstreuschicht (155) eine an der Innenfläche (153) angebrachte, transparente mattierte Folie ist.

12. Mobiles Endgerät nach Anspruch 8 oder 9, wobei die Lichtstreuschicht (155) eine halbtransparente Druckfarbschicht ist.

13. Mobiles Endgerät nach einem der Ansprüche 8 bis 12, wobei das Abdeckelement (15) eine transparente Glasplatte ist.

## Revendications

1. Panneau de couverture (15) pour recouvrir un module d'affichage,
dans lequel le panneau de couverture (15) comprend une région transparente (151) et une région de bordure (152) entourant la région transparente (151), dans lequel la région transparente (151) a une surface de protection et une surface arrière opposée à la surface de protection, dans lequel la surface arrière est destinée à faire face à une région d'affichage (121) du module d'affichage ;
dans lequel la région de bordure (152) a une surface externe (154) et une surface interne (153), dans lequel la surface interne (153) a une première extrémité se connectant à la surface externe (154) et une seconde extrémité opposée à la première extrémité, dans lequel la surface externe (154) est disposée à l'opposé de la surface interne (153), et dans lequel la surface externe (154) est une surface en forme d'arc s'éloignant de la région transparente (151) et s'incurvant ; et
**caractérisé en ce que** :
la seconde extrémité de la surface interne (153) se connecte à la surface arrière de la région transparente (151) ;
la surface interne (153) et la surface arrière de la région transparente (151) se trouvent dans le même plan ;
une couche de diffusion de lumière (155) est disposée sur la surface interne (153) dans la région de bordure (152), de sorte que la couche de diffusion de lumière (155) diffuse de la lumière incidente dans la région de bordure (152) qui passe à travers la couche de diffusion de lumière (155), et la lumière diffusée sort de la surface externe (151), dans lequel la couche de diffusion de lumière (155) a une projection orthographique sur la surface externe (154), et la projection orthographique coïncide avec la surface externe (154).

2. Panneau de couverture selon la revendication 1, dans lequel la région de bordure (152) et la région transparente (151) forment une plaque plate d'un seul tenant.

3. Panneau de couverture selon la revendication 1 ou 2, dans lequel la couche de diffusion de lumière (155) est une couche dépolie formée sur la surface interne (153).

4. Panneau de couverture selon la revendication 1 ou 2, dans lequel la couche de diffusion de lumière (155) est un film dépoli transparent fixé à la surface interne (153).

5. Panneau de couverture selon la revendication 1 ou 2, dans lequel la couche de diffusion de lumière (155) est une couche d'encre semi-transparente.

6. Panneau de couverture selon la revendication 4, dans lequel une première surface du film dépoli est une surface rugueuse, et l'autre surface du film dépoli est munie d'un adhésif.

7. Panneau selon l'une quelconque des revendications 1 à 6, dans lequel le panneau (15) est une plaque de verre transparente.

8. Terminal mobile, comprenant un module de rétroéclairage (10), un module d'affichage (12) monté sur le module de rétroéclairage (10) et le panneau de couverture (15) de la revendication 1, dans lequel le module d'affichage (12) comprend la région d'affichage (121) et une région de non-affichage (122) disposée autour de la région d'affichage (121) ; le panneau de couverture (15) recouvre le module d'affichage (12), la région transparente (151) recouvrant la région d'affichage (121), la région de bordure (152) recouvrant la région de non affichage (122).

9. Terminal mobile selon la revendication 8, dans lequel la région de bordure (152) et la région transparente (151) forment une plaque plate d'un seul tenant.

10. Terminal mobile selon la revendication 8 ou 9, dans lequel la couche de diffusion de lumière (155) est une couche dépolie formée sur la surface interne (153).

11. Terminal mobile selon la revendication 8 ou 9, dans lequel la couche de diffusion de lumière (155) est un film dépoli transparent fixé à la surface interne (153).

12. Terminal mobile selon la revendication 8 ou 9, dans lequel la couche de diffusion de lumière (155) est une couche d'encre semi-transparente.

13. Terminal mobile selon l'une quelconque des revendications 8 à 12, dans lequel le panneau de couverture (15) est une plaque de verre transparente.
